# EUROPEAN PATENT SPECIFICATION

(11) **EP 4 109 718 B1**
(45) Date of publication and mention of the grant of the patent: **09.10.2024**
(21) Application number: 21180885.2
(22) Date of filing: 22.06.2021
(51) Int. Cl.: F04D 29/58, H02K 5/12, H02K 5/18, F04D 13/06, H02K 7/14, H02K 5/128

(54) **CANNED MOTOR DEVICE**
SPALTROHRMOTORVORRICHTUNG
DISPOSITIF DE MOTEUR À GAINE

(43) Date of publication of application: 28.12.2022
(73) Proprietor: Zi Yi Electrical Engineering Co., Ltd., Taichung City 408 (TW)
(72) Inventor: HUANG, Ting-Tsai, 414 Taichung City (TW)
(74) Representative: Meissner Bolte Partnerschaft mbB

(56) References cited:
- EP-A1- 1 211 784
- EP-A2- 0 634 827
- EP-A2- 2 589 812
- KR-B1- 101 321 105
- US-A1- 2020 204 033

## Description

The disclosure relates to a canned motor device, and more particularly to a canned motor device with enhanced heat-dissipation efficiency.

A conventional canned motor device disclosed in Taiwanese Patent No. M577069 includes a base, a fixed seat, a motor unit, a motor cover and a heat-dissipating cover. The base is made of plastic materials, and includes a covering member and a main body member that has an inner annular surface surrounding an axis to define a mounting space. The fixed seat is made of metal materials, is formed in a shape of a hollow cylinder that surrounds the axis, is fixedly mounted within the mounting space, and has an outer annular surface that abuts against the inner annular surface of the base. The motor unit includes a case body, a stator, a rotor and an impeller. The case body is disposed on the base. The stator is sleeved on the case body and is disposed within the mounting space. The rotor is disposed within the case body. The impeller is connected to the rotor. The motor cover is disposed on the base and covers the impeller. The heat-dissipating cover is disposed on the covering member of the base. The fixed seat and the motor unit are positioned relative to the base along the axis by the heat-dissipating cover.

Because the fixed seat is made of metal materials, the fixed seat has relatively high structural strength and is capable of withstanding heat generated by the stator during operation. However, the heat may not be effectively dissipated because the outer annular surface of the fixed seat and the inner annular surface of the base closely abut against each other.

A canned motor device including a fixed seat, a motor unit, and a heat-dissipation cover is known from US 2020/204033 A1.

Therefore, an object of the disclosure is to provide a canned motor device that can alleviate the drawback of the prior art.

According to the disclosure, the canned motor device includes a base, a fixed seat, a motor unit and a motor cover. The base is made of a plastic material, is formed in a shape of a hollow cylinder that surrounds an axis, and has a first end surface, a second end surface and an inner base surface. The second end surface is opposite to the first end surface along the axis. The inner base surface surrounds the axis, interconnects the first end surface and the second end surface, and defines an accommodating space. The fixed seat is made of an aluminum alloy, is formed in a shape of a hollow cylinder that surrounds the axis (L), is disposed in the accommodating space, and has an inner seat surface, an outer seat surface, a plurality of recesses and a plurality of first heat-dissipating fins. The inner seat surface surrounds the axis and defines an inner space. The outer seat surface surrounds and corresponds in position to the inner seat surface, and cooperates with the inner base surface of the base to define at least one gap therebetween. The recesses are indented from the outer seat surface and extend toward the inner seat surface. Each of the first heat-dissipating fins is located between two adjacent ones of the recesses. The motor unit includes a case body, a stator, a rotor and an impeller. The case body is disposed on the base. The stator is sleeved on the case body and is disposed in the accommodating space. The rotor is disposed in the case body. The impeller is connected to the rotor. The motor cover is disposed on the first end surface of the base and covers the impeller.

Other features and advantages of the disclosure will become apparent in the following detailed description of the embodiment with reference to the accompanying drawings, of which:
Figure 1 is an exploded perspective view of an embodiment of a canned motor device according to the disclosure;
Figure 2 is a perspective view of a fixed seat of the embodiment;
Figure 3 is a sectional view of the embodiment;
Figure 4 is a sectional view taken long line IV - IV in Figure 3; and
Figure 5 is a fragmentary, enlarged view of Figure 3.

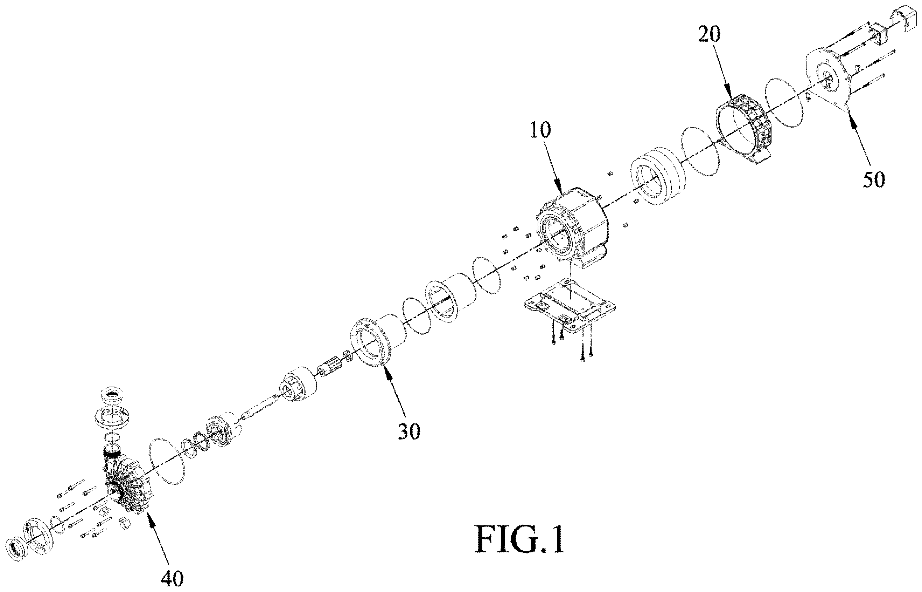

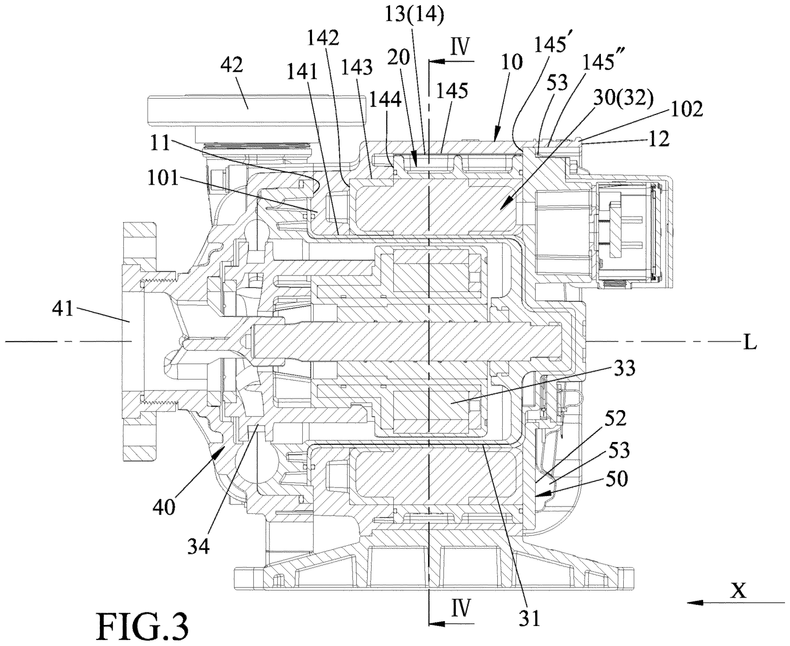

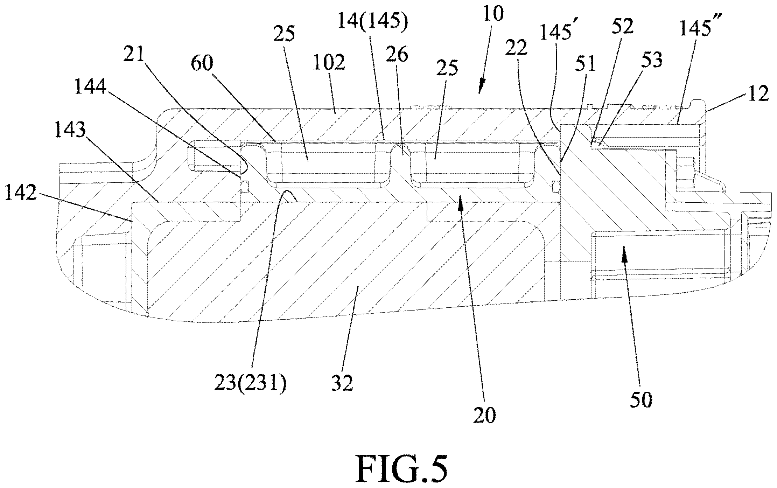

Referring to Figures 1, 3 and 5, an embodiment of a canned motor device according to the disclosure includes a base 10, a fixed seat 20, a motor unit 30, a motor cover 40 and a heat-dissipating cover 50.

The base 10 is made of a plastic material and is formed in a shape of a hollow cylinder that surrounds an axis (L) . In this embodiment, the plastic material may be an engineering plastic with acid and alkali resistance, such as polypropylene (PP), glass fiber reinforced polypropylene (GFRPP), polyvinylidene difluoride (PVDF) and carbon fiber filled ethylene tetrafluoroethylene (CFRETFE). The base 10 includes a main body member 101 and a covering member 102 that are arranged in a direction (X) of the axis (L) . The covering member 102 is connected to the main body member 101. The base 10 has a first end surface 11, a second end surface 12 and an inner base surface 14. The first end surface 11 is located on one side of the main body member 101 opposite to the covering member 102. The second end surface 12 is located on one side of the covering member 102 opposite to the first end surface 11 along the axis (L) . The inner base surface 14 surrounds the axis (L), interconnects the first end surface 11 and the second end surface 12, and defines an accommodating space 13.

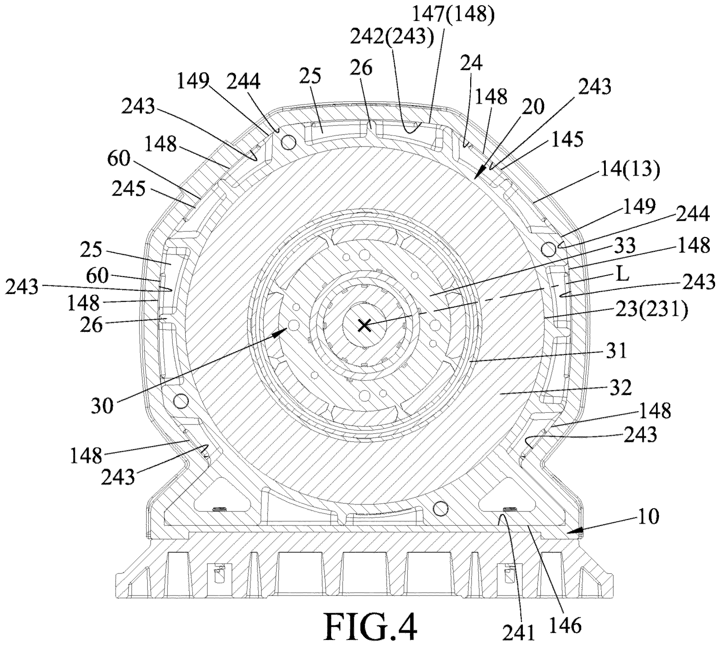

The inner base surface 14 of the base 10 has a stepped profile, and has a first axial segment 141, a second axial segment 143, a third axial segment 145, a fourth axial segment 145", a first abutting part 142, a second abutting part 144 and a third abutting part 145' . The first axial segment 141 is connected to the first end surface 11. Each of the first axial segment 141, the second axial segment 143, the third axial segment 145 and the fourth axial segment 145" extends substantially in the direction (X) of the axis (L) . Each of the first abutting part 142, the second abutting part 144 and the third abutting part 145' extends substantially perpendicularly to the axis (L). The first abutting part 142, the second abutting part 144 and the third abutting part 145' respectively interconnect the first axial segment 141 and the second axial segment 143, the second axial segment 143 and the third axial segment 145, and the third axial segment 145 and the fourth axial segment 145". The fourth axial segment 145'' is connected to the second end surface 12. In this embodiment, the first abutting part 142, the second abutting part 144 and the third abutting part 145' face away from the first end surface 11. Referring to Figure 4, a cross section of a space defined by the third axial segment 145 that is perpendicular to the axis (L) is non-circular. The third axial segment 145 has a base dovetail region 146, and a base multi-corner region 147 connected to the base dovetail region 146. The base multi-corner region 147 has a plurality of inner edge parts 148. In this embodiment, the base multi-corner region 147 has seven inner edge parts 148. Any two adjacent ones of the inner edge parts 148 define an inner corner part 149 therebetween.

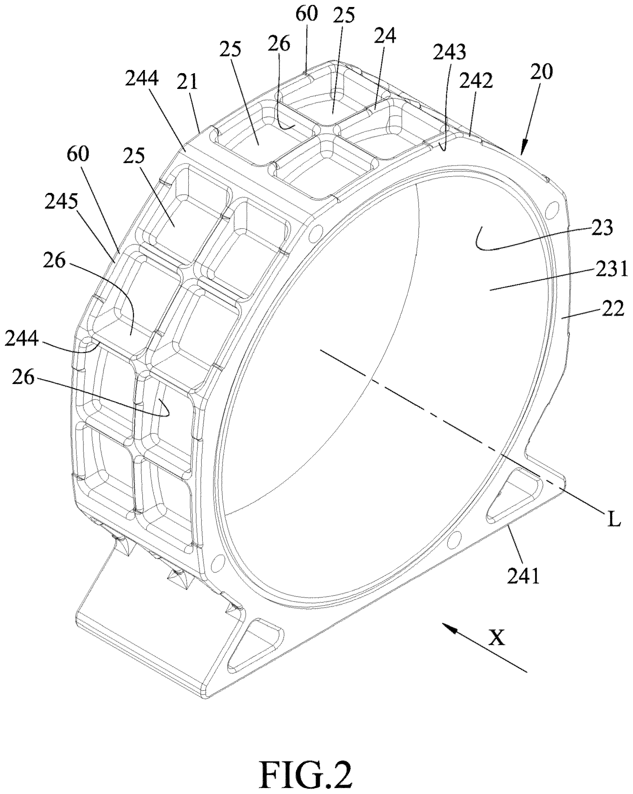

Referring further to Figure 2, the fixed seat 20 is made of an aluminum alloy, is formed in a shape of a hollow cylinder that surrounds the axis (L), is non-rotatably disposed in the accommodating space 13 of the base 10, and has an inner seat surface 23, an outer seat surface 24, a plurality of recesses 25 and a plurality of first heat-dissipating fins 26. The fixed seat 20 further has a first seat surface 21 that abuts against the second abutting segment 144 of the inner base surface 14, and a second seat surface 22 that is opposite to the first seat surface 21 along the axis (L) . The inner seat surface 23 interconnects the first seat surface 21 and the second seat surface 22, surrounds the axis (L) and defines an inner space 231. The outer seat surface 24 surrounds and corresponds in position to the inner seat surface 23, and cooperates with the inner base surface 14 of the base 10 to define at least one gap 60 therebetween. In this embodiment, the outer seat surface 24 cooperates with the inner base surface 14 to define a plurality of gaps 60 therebetween. The recesses 25 are indented from the outer seat surface 24 and extend toward the inner seat surface 23. The first heat-dissipating fins 26 are each located between two adjacent ones of the recesses 25. A cross section of the fixed seat 20 perpendicular to the axis (L) is non-circular and has a shape corresponding to the shape of the cross section of the space defined by the third axial segment 145. The outer seat surface 24 has a seat dovetail region 241, and a seat multi-corner region 242 connected to the seat dovetail region 241. The seat multi-corner region 242 has a plurality of outer edge parts 243 at which the recesses 25 are formed. In this embodiment, the seat multi-corner region 242 has seven outer edge parts 243. The outer edge parts 243 respectively face the inner edge parts 148 of the inner base surface 14. Any two adjacent ones of the outer edge parts 243 define an outer corner part 244 therebetween. Each of the outer edge parts 243 cooperates with the respective one of the inner edge parts 148 of the third axial segment 145 to define one of the gaps 60 therebetween. Each of the gaps 60 extends in the direction (X) of the axis (L) . At least one of the first heat-dissipating fins 26 is located between two adjacent ones of the recesses 25 respectively formed at two adjacent ones of the outer edge parts 243. In this embodiment, each of the outer edge parts 243 is recessed with a shallow groove 245 extending in the direction (X) of the axis (L) to serve as the respective one of the gaps 60. That is to say, each of the gaps 60 is formed in the respective one of the outer edge parts 243. The depth of each of the shallow grooves 245 in a radial direction transverse to the axis (L) is substantially 1 millimeter. In this embodiment, each of the shallow grooves 245 extends through two opposite end surfaces of the fixed seat 20 along the axis (L).

The motor unit 30 includes a case body 31, a stator 32, a rotor 33 and an impeller 34. The case body 31 is disposed on the base 10. The stator 32 is sleeved on the case body 31, is disposed in the accommodating space 13, and has two stator end surfaces each perpendicular to the axis (L), and an outer stator surface interconnecting the stator end surfaces. Specifically, the stator 32 is partly disposed in the inner space 231 of the fixed seat 20, abuts against the first abutting part 142 of the inner base surface 14 with one of the stator end surfaces thereof, and abuts against the second axial segment 143 and the inner seat surface 23 of the fixed seat 20 with the outer stator surface thereof. The rotor 33 is disposed in the case body 31. The impeller 34 is connected to the rotor 33. Since the relevant features of this disclosure do not concern the specific configuration of the motor unit 30, further details of the same are omitted herein for the sake of brevity.

The motor cover 40 is disposed on the first end surface 11 of the base 10 and covers the impeller 34. Specifically, the motor cover 40 is fixedly mounted to the first end surface 11 by a plurality of screws, and has an intake opening 41 at an end thereof along the axis (L), and an exit opening 42 located at one side of the intake opening 41 that is the same as the impeller 34 and extending along a tangent line (not shown) to the outer periphery of the impeller.

The heat-dissipating cover 50 is made of an aluminum alloy, is disposed on the base 10, has a first cover surface 51 and a second cover surface 52, and includes a plurality of outer heat-dissipating fins 53. The first cover surface 51 and the second cover surface 52 are respectively located at two opposite sides of the heat-dissipating cover 50 in the direction (X) of the axis (L). The outer heat-dissipating fins 53 protrude from the second cover surface 52 and away from the first cover surface 51. The first cover surface 51 abuts against the third abutting part 145' of the inner base surface 14, the second seat surface 22 of the fixed seat 20 and the other one of the stator end surfaces of the stator 32. The heat-dissipating cover 50 corresponds in position to the fourth axial segment 145'' of the inner base surface 14 and is surrounded by the covering member 102 (i.e., the heat-dissipating cover 50 is located in the base 10).

In the following description, the advantages provided by the structures of the embodiment of the canned motor device of the disclosure are described.

When the stator 32 of the motor unit 30 is energized, the rotor 33 of the motor unit 30 is driven by the stator 32 to rotate and to further drive the impeller 34 of the motor unit 30 to co-rotate so that the embodiment may pump liquid in a manner that the liquid is moved into the canned motor device through the intake opening 41 and are moved toward the exit opening 42 by the impeller 34 to exit the canned motor device through the exit opening 42.

When the motor unit is in operation, heat is generated by the stator 32 and then conducted to the fixed seat 20. By virtue of each of the first heat-dissipating fins 26 located between two adjacent ones of the recesses 25 that are indented from the outer seat surface 24 of the fixed seat 20, the fixed seat 20 has a relatively large surface area to dissipate the heat to the gaps 60. By virtue of the gaps 60 between the outer seat surface 24 and the inner base surface 14, the heat dissipated by the recesses 25 and the first heat-dissipating fins 26 will be transferred to the heat-dissipating cover 50 through the gaps 60, and then be dissipated to the external environment through the outer heat-dissipating fins 53 of the heat-dissipating cover 50. Moreover, because the first cover surface 51 of the heat-dissipating cover 50 abuts the other one of the stator end surfaces of the stator 32, the heat generated by the stator 32 may be dissipated directly by the heat-dissipating cover 50. Therefore, heat-dissipation efficiency of the embodiment is relatively high.

In addition, the recesses 25 that are indented from the outer seat surface 24 of the fixed seat 20 reduces the weight of the fixed seat 20 so that the embodiment may be lightweight.

Overall, the canned motor device of the disclosure offers a design that is easy to assemble while providing enhanced heat-dissipation efficiency.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A canned motor device comprising:
a base (10) made of a plastic material, formed in a shape of a hollow cylinder that surrounds an axis (L), and having
a first end surface (11),
a second end surface (12) that is opposite to said first end surface (11) along the axis (L), and
an inner base surface (14) that surrounds the axis (L), that interconnects said first end surface (11) and said second end surface (12), and that defines an accommodating space (13);
said canned motor device further comprising
a fixed seat (20) made of an aluminum alloy, formed in a shape of a hollow cylinder that surrounds the axis (L), disposed in said accommodating space (13), and having
an inner seat surface (23) that surrounds the axis (L) and that defines an inner space (231), and
an outer seat surface (24) that surrounds and corresponds in position to said inner seat surface (23);
said canned motor device further comprising
a motor unit (30) including
a case body (31) that is disposed on said base (10),
a stator (32) that is sleeved on said case body (31) and that is disposed in said accommodating space (13),
a rotor (33) that is disposed in said case body (31), and
an impeller (34) that is connected to said rotor (33),
said case body (31) being located between said stator (32) and said rotor (33), and opening toward said impeller (34) to accommodate said rotor (33); and
a motor cover (40) disposed on said first end surface (11) of said base (10) and covering said impeller (34);
said canned motor device being **characterized in that**:
said outer seat surface (24) of said fixed seat (20) cooperates with said inner base surface (14) of said base (10) to define at least one gap (60) therebetween; and
said fixed seat (20) further has
a plurality of recesses (25) indented from said outer seat surface (24) and extending toward said inner seat surface (23), and
a plurality of first heat-dissipating fins (26) each being located between two adjacent ones of said recesses (25),
said at least one gap (60) spatially communicating with at least one of said recesses (25).

2. The canned motor device as claimed in claim 1, further **characterized by** a heat-dissipating cover (50) that is made of an aluminum alloy, that is disposed on said base (10), that has a first cover surface (51) and a second cover surface (52) respectively located at two opposite sides of said heat-dissipating cover (50) in a direction (X) of the axis (L), and that includes a plurality of outer heat-dissipating fins (53) protruding from said second cover surface (52) and away from said first cover surface (51), said first cover surface (51) abutting against said fixed seat (20).

3. The canned motor device as claimed in claim 2, **characterized in that**:
said inner base surface (14) of said base (10) has a stepped profile, and has
a first axial segment (141) connected to said first end surface (11) and extending substantially in the direction (X) of the axis (L),
a second axial segment (143) extending substantially in the direction (X) of the axis (L),
a third axial segment (145) extending substantially in the direction (X) of the axis (L),
a fourth axial segment (145'') extending substantially in the direction (X) of the axis (L) and connected to said second end surface (12),
a first abutting part (142) extending substantially perpendicular to the axis (L) and interconnecting said first axial segment (141) and said second axial segment (143),
a second abutting part (144) extending substantially perpendicular to the axis (L) and interconnecting said second axial segment (143) and said third axial segment (145), and
a third abutting part (145') extending substantially perpendicular to the axis (L) and interconnecting said third axial segment (145) and said fourth axial segment (145");
said stator (32) abuts against said first abutting part (142) and said first cover surface (51) of said heat-dissipating cover (50);
said fixed seat (20) abuts against said second abutting part (144) and said first cover surface (51); and
said at least one gap (60) is formed between said outer seat surface (24) and said third axial segment (145) .

4. The canned motor device as claimed in claim 3, **characterized in that**:
said third axial segment (145) of said inner base surface (14) has a base dovetail region (146) and a base multi-corner region (147) connected to said base dovetail region (146), said base multi-corner region (147) having a plurality of inner edge parts (148), any two adjacent ones of said inner edge parts (148) defining an inner corner part (149) therebetween;
said outer seat surface (24) cooperates with said inner base surface (14) of said base (10) to define a plurality of said gap (60) therebetween;
said outer seat surface (24) of said fixed seat (20) has a seat dovetail region (241) and a seat multi-corner region (242) connected to said seat dovetail region (241), said seat multi-corner region (242) having a plurality of outer edge parts (243) at which said recesses (25) are formed, said outer edge parts (243) respectively facing said inner edge parts (148), any two adjacent ones of said outer edge parts (243) defining an outer corner part (244) therebetween, each of said outer edge parts (243) cooperating with the respective one of said inner edge parts (148) of said third axial segment (145) to define one of said gaps (60) therebetween;
each of said gaps (60) extends in the direction (X) of the axis (L); and
at least one of said first heat-dissipating fins (26) is located between two adjacent ones of said recesses (25) respectively formed at two adjacent ones of said outer edge parts (243).

5. The canned motor device as claimed in claim 4, **characterized in that** each of said gaps (60) is formed in the respective one of said outer edge parts (243) of said fixed seat (20).

## Patentansprüche

1. Spaltrohrmotorvorrichtung, umfassend:
eine Basis (10), die aus einem Kunststoffmaterial hergestellt ist, das in einer Form eines Hohlzylinders ausgebildet ist, der eine Achse (L) umgibt, und Folgendes aufweist
eine erste Endfläche (11),
eine zweite Endfläche (12), die der ersten Endfläche (11) entlang der Achse (L) gegenüberliegt, und
eine innere Basisfläche (14), welche die Achse (L) umgibt, welche die erste Endfläche (11) und die zweite Endfläche (12) miteinander verbindet, und die einen Aufnahmeraum (13) definiert,
wobei die Spaltrohrmotorvorrichtung ferner Folgendes umfasst
einen festen Sitz (20), der aus einer Aluminiumlegierung hergestellt ist, der in einer Form eines Hohlzylinders ausgebildet ist, der die Achse (L) umgibt, und der in dem Aufnahmeraum (13) angeordnet ist und Folgendes aufweist
eine innere Sitzfläche (23), welche die Achse (L) umgibt und die einen Innenraum (231) definiert, und
eine äußere Sitzfläche (24), welche die innere Sitzfläche (23) umgibt und in Position dieser entspricht;
wobei die Spaltrohrmotorvorrichtung ferner Folgendes umfasst
eine Motoreinheit (30), beinhaltend
einen Gehäusekörper (31), der an der Basis (10) angeordnet ist,
einen Stator (32), der über den Gehäusekörper (31) geschoben ist und der in dem Aufnahmeraum (13) angeordnet ist,
einen Rotor (33), der in dem Gehäusekörper (31) angeordnet ist, und
ein Laufrad (34), das mit dem Rotor (33) verbunden ist,
wobei sich der Gehäusekörper (31) zwischen dem Stator (32) und dem Rotor (33) befindet und sich zu dem Laufrad (34) hin öffnet, um den Rotor (33) aufzunehmen; und
eine Motorabdeckung (40), die an der ersten Endfläche (11) der Basis (10) angeordnet ist und das Laufrad (34) abdeckt;
wobei die Spaltrohrmotorvorrichtung **dadurch gekennzeichnet ist, dass**:
die äußere Sitzfläche (24) des festen Sitzes (20) mit der inneren Basisfläche (14) der Basis (10) zusammenwirkt, um mindestens einen Zwischenraum (60) dazwischen zu definieren, und
der feste Sitz (20) ferner Folgendes aufweist
eine Vielzahl von Aussparungen (25), die von der äußeren Sitzfläche (24) eingekerbt sind und sich zu der inneren Sitzfläche (23) erstrecken, und
eine Vielzahl von ersten wärmeabgebenden Rippen (26), die sich jeweils zwischen zwei benachbarten der Aussparungen (25) befinden,
wobei der mindestens eine Zwischenraum (60) mit mindestens einer der Aussparungen (25) räumlich kommuniziert.

2. Spaltrohrmotorvorrichtung nach Anspruch 1, ferner **gekennzeichnet durch** eine wärmeabgebende Abdeckung (50), die aus einer Aluminiumlegierung hergestellt ist, die auf der Basis (10) angeordnet ist, die eine erste Abdeckungsfläche (51) und eine zweite Abdeckungsfläche (52) aufweist, die sich jeweils an zwei gegenüberliegenden Seiten der wärmeabgebenden Abdeckung (50) in einer Richtung (X) der Achse (L) befinden, und die eine Vielzahl von äußeren wärmeabgebenden Rippen (53) beinhaltet, die von der zweiten Abdeckungsfläche (52) hervorstehen und von der ersten Abdeckungsfläche (51) weggerichtet sind, wobei die erste Abdeckungsfläche (51) an dem festen Sitz (20) anliegt.

3. Spaltrohrmotorvorrichtung nach Anspruch 2, **dadurch gekennzeichnet, dass**:
die innere Basisfläche (14) der Basis (10) ein gestuftes Profil aufweist und Folgendes aufweist
ein erstes axiales Segment (141), das mit der ersten Endfläche (11) verbunden ist und sich im Wesentlichen in der Richtung (X) der Achse (L) erstreckt,
ein zweites axiales Segment (143), das sich im Wesentlichen in der Richtung (X) der Achse (L) erstreckt,
ein drittes axiales Segment (145), das sich im Wesentlichen in der Richtung (X) der Achse (L) erstreckt,
ein viertes axiales Segment (145"), das sich im Wesentlichen in der Richtung (X) der Achse (L) erstreckt und mit der zweiten Endfläche (12) verbunden ist,
einen ersten anliegenden Teil (142), der sich im Wesentlichen senkrecht zu der Achse (L) erstreckt und das erste axiale Segment (141) und das zweite axiale Segment (143) miteinander verbindet,
einen zweiten anliegenden Teil (144), der sich im Wesentlichen senkrecht zu der Achse (L) erstreckt und das zweite axiale Segment (143) und das dritte axiale Segment (145) miteinander verbindet, und
einen dritten anliegenden Teil (145'), der sich im Wesentlichen senkrecht zu der Achse (L) erstreckt und das dritte axiale Segment (145) und das vierte axiale Segment (145") miteinander verbindet;
wobei der Stator (32) an dem ersten anliegenden Teil (142) und der ersten Abdeckungsfläche (51) der wärmeabgebenden Abdeckung (50) anliegt;
wobei der feste Sitz (20) an dem zweiten anliegenden Teil (144) und der ersten Abdeckungsfläche (51) anliegt; und
wobei der mindestens eine Zwischenraum (60) zwischen der äußeren Sitzfläche (24) und dem dritten axialen Segment (145) ausgebildet ist.

4. Spaltrohrmotorvorrichtung nach Anspruch 3, **dadurch gekennzeichnet, dass**:
das dritte axiale Segment (145) der inneren Basisfläche (14) einen Basis-Schwalbenschwanzbereich (146) und einen Basis-Mehreckenbereich (147), der mit dem Basis-Schwalbenschwanzbereich (146) verbunden ist, aufweist, wobei der Basis-Mehreckenbereich (147) eine Vielzahl von Innenkantenteilen (148) aufweist, wobei beliebige zwei benachbarte der Innenkantenteile (148) dazwischen einen Inneneckenteil (149) definieren,
die äußere Sitzfläche (24) mit der inneren Basisfläche (14) der Basis (10) zusammenwirkt, um eine Vielzahl der Zwischenräume (60) dazwischen zu definieren,
die äußere Sitzfläche (24) des festen Sitzes (20) einen Sitz-Schwalbenschwanzbereich (241) und einen Sitz-Mehreckenbereich (242), der mit dem Sitz-Schwalbenschwanzbereich (241) verbunden ist, aufweist, wobei der Sitz-Mehreckenbereich (242) eine Vielzahl von Außenkantenteilen (243) aufweist, an denen die Aussparungen (25) ausgebildet sind, wobei die Außenkantenteile (243) jeweils den Innenkantenteilen (148) zugewandt sind, wobei beliebige zwei benachbarte der Außenkantenteile (243) einen Außeneckenteil (244) dazwischen definieren, wobei jeder der Außenkantenteile (243) mit dem jeweiligen der Innenkantenteile (148) des dritten axialen Segments (145) zusammenwirkt, um einen der Zwischenräume (60) dazwischen zu definieren,
wobei sich jeder der Zwischenräume (60) in der Richtung (X) der Achse (L) erstreckt; und
wobei sich mindestens eine der ersten wärmeabgebenden Rippen (26) zwischen zwei benachbarten der Aussparungen (25) befindet, die jeweils an zwei benachbarten der Außenkantenteile (243) ausgebildet sind.

5. Spaltrohrmotorvorrichtung nach Anspruch 4, **dadurch gekennzeichnet, dass** jeder der Zwischenräume (60) in dem jeweiligen der Außenkantenteile (243) des festen Sitzes (20) ausgebildet ist.

## Revendications

1. Dispositif moteur à stator chemisé comprenant :
une base (10) en matière plastique, façonnée en une forme de cylindre creux qui entoure un axe (L), et ayant
une première surface d'extrémité (11),
une seconde surface d'extrémité (12) qui est opposée à ladite première surface d'extrémité (11) le long de l'axe (L), et
une surface de base interne (14) qui entoure l'axe (L), qui relie mutuellement ladite première surface d'extrémité (11) et ladite seconde surface d'extrémité (12), et qui définit un espace de logement (13) ;
ledit dispositif moteur à stator chemisé comprenant en outre
un siège fixe (20) en alliage d'aluminium, formé en une forme de cylindre creux qui entoure l'axe (L), disposé dans ledit espace de logement (13), et ayant
une surface de siège interne (23) qui entoure l'axe (L) et qui définit un espace interne (231), et
une surface de siège externe (24) qui entoure et correspond en position à ladite surface de siège interne (23) ;
ledit dispositif moteur à stator chemisé comprenant en outre
une unité motrice (30) incluant
un corps de carter (31) qui est disposé sur ladite base (10),
un stator (32) qui est manchonné sur ledit corps de carter (31) et qui est disposé dans ledit espace de logement (13),
un rotor (33) qui est disposé dans ledit corps de carter (31), et
une roue (34) qui est reliée audit rotor (33), ledit corps de carter (31) étant situé entre ledit stator (32) et ledit rotor (33), et s'ouvrant vers ladite roue (34) pour loger ledit rotor (33) ; et
un couvercle de moteur (40) disposé sur ladite première surface d'extrémité (11) de ladite base (10) et recouvrant ladite roue (34) ;
ledit dispositif moteur à stator chemisé étant **caractérisé en ce que** :
ladite surface de siège externe (24) dudit siège fixe (20) coopère avec ladite surface de base interne (14) de ladite base (10) pour définir au moins un espacement (60) entre eux ; et
ledit siège fixe (20) comporte en outre
une pluralité d'évidements (25) en retrait de ladite surface de siège externe (24) et s'étendant vers ladite surface de siège interne (23), et
une pluralité de premières ailettes de dissipation de chaleur (26) situées chacune entre deux évidements adjacents desdits évidements (25),
ledit au moins un espacement (60) communiquant spatialement avec au moins un desdits évidements (25).

2. Dispositif moteur à stator chemisé selon la revendication 1, **caractérisé en outre par** un couvercle de dissipation de chaleur (50) qui est en alliage d'aluminium, qui est disposé sur ladite base (10), qui a une première surface de couvercle (51) et une seconde surface de couvercle (52) respectivement situées sur deux côtés opposés dudit couvercle de dissipation de chaleur (50) dans une direction (X) de l'axe (L), et qui inclut une pluralité d'ailettes de dissipation de chaleur externes (53) faisant saillie à partir de ladite seconde surface de couvercle (52) et à l'écart de ladite première surface de couvercle (51), ladite première surface de couvercle (51) venant en butée contre ledit siège fixe (20).

3. Dispositif moteur à stator chemisé selon la revendication 2, **caractérisé en ce que** :
ladite surface de base interne (14) de ladite base (10) présente un profil en escalier, et comporte
un premier segment axial (141) relié à ladite première surface d'extrémité (11) et s'étendant sensiblement dans la direction (X) de l'axe (L),
un deuxième segment axial (143) s'étendant sensiblement dans la direction (X) de l'axe (L),
un troisième segment axial (145) s'étendant sensiblement dans la direction (X) de l'axe (L),
un quatrième segment axial (145") s'étendant sensiblement dans la direction (X) de l'axe (L) et relié à ladite seconde surface d'extrémité (12),
une première partie de butée (142) s'étendant sensiblement perpendiculairement à l'axe (L) et reliant mutuellement ledit premier segment axial (141) et ledit deuxième segment axial (143),
une deuxième partie de butée (144) s'étendant sensiblement perpendiculairement à l'axe (L) et reliant mutuellement ledit deuxième segment axial (143) et ledit troisième segment axial (145), et
une troisième partie de butée (145') s'étendant sensiblement perpendiculairement à l'axe (L) et reliant mutuellement ledit troisième segment axial (145) et ledit quatrième segment axial (145'') ;
ledit stator (32) vient en butée contre ladite première partie de butée (142) et ladite première surface de couvercle (51) dudit couvercle de dissipation de chaleur (50) ;
ledit siège fixe (20) vient en butée contre ladite deuxième partie de butée (144) et ladite première surface de couvercle (51) ; et
ledit au moins un espacement (60) est formé entre ladite surface de siège externe (24) et ledit troisième segment axial (145).

4. Dispositif moteur à stator chemisé selon la revendication 3, **caractérisé en ce que** :
ledit troisième segment axial (145) de ladite surface de base interne (14) a une région de base à queue d'aronde (146) et une région de base à coins multiples (147) reliée à ladite région de base à queue d'aronde (146), ladite région de base à coins multiples (147) ayant une pluralité de parties de bord interne (148), deux parties adjacentes quelconques desdites parties de bord interne (148) définissant une partie de coin interne (149) entre elles ;
ladite surface de siège externe (24) coopère avec ladite surface de base interne (14) de ladite base (10) pour définir une pluralité dudit espacement (60) entre elles ;
ladite surface de siège externe (24) dudit siège fixe (20) a une région à queue d'aronde de siège (241) et une région à coins multiples de siège (242) reliée à ladite région à queue d'aronde de siège (241), ladite région à coins multiples de siège (242) ayant une pluralité de parties de bord externe (243) au niveau desquelles sont formés lesdits évidements (25), lesdites parties de bord externe (243) faisant respectivement face aux parties de bord interne (148), deux parties adjacentes quelconques des parties de bord externe (243) définissant une partie de coin externe (244) entre elles, chacune desdites parties de bord externe (243) coopérant avec la partie respective desdites parties de bord interne (148) dudit troisième segment axial (145) pour définir l'un desdits espacements (60) entre elles ;
chacun desdits espacements (60) s'étend dans la direction (X) de l'axe (L) ; et
au moins l'une desdites premières ailettes de dissipation de chaleur (26) est située entre deux évidements adjacents desdits évidements (25) respectivement formés au niveau de deux parties adjacentes desdites parties de bord externe (243).

5. Dispositif moteur à stator chemisé selon la revendication 4, **caractérisé en ce que** chacun desdits espacements (60) est formé dans la partie respective desdites parties de bord externe (243) dudit siège fixe (20).
